# EUROPÄISCHE PATENTSCHRIFT

(11) **EP 3 552 285 B1**
(45) Veröffentlichungstag und Bekanntmachung des Hinweises auf die Patenterteilung: **31.01.2024**
(21) Anmeldenummer: 17808937.1
(22) Anmeldetag: 06.12.2017
(51) Int. Cl.: H02G 7/00, H01B 17/50, H01B 17/12

(54) **VERSCHMUTZUNGSSCHUTZ FÜR HOCHSPANNUNGSISOLATOREN**
PROTECTION AGAINST CONTAMINATION FOR HIGH VOLTAGE INSULATORS
PROTECTION CONTRE LA POUSSIÈRE POUR ISOLATEURS HAUTE TENSION

(30) Priorität: 06.12.2016 EP 16202326
(43) Veröffentlichungstag der Anmeldung: 16.10.2019
(73) Patentinhaber: Bayernwerk Netz GmbH, 93049 Regensburg (DE)
(72) Erfinder: TAUBER, Wolfgang, 92676 Eschenbach (DE)
(74) Vertreter: Glawe, Delfs, Moll
(86) Internationale Anmeldenummer: PCT/EP2017/081605
(87) Internationale Veröffentlichungsnummer: WO 2018/104352

(56) Entgegenhaltungen:
- EP-A1- 1 566 869
- WO-A1-96/16416
- CN-A- 104 200 935
- DE-T2- 69 515 327
- JP-A- H10 199 350
- JP-A- 2012 038 736
- US-A- 4 201 883
- US-A- 5 679 922
- US-B1- 6 291 774

## Beschreibung

Die Erfindung betrifft eine Verschmutzungsschutzvorrichtung für Hochspannungsisolatoren sowie eine Anordnung aus Verschmutzungsschutzvorrichtung und Hochspannungsisolator.

Überirdische Hochspannungsleitungen sind regelmäßig über Hochspannungsmasten geführt. Um die Hochspannungsmasten elektrisch von den Hochspannungsleitungen zu trennen, sind an den Aufhängungspunkten zwischen den Hochspannungsleitungen und den Hochspannungsmasten jeweils Hochspannungsisolatoren vorgesehen.

Dabei kommen häufig Langstabisolatoren zum Einsatz, die an Traversen des Hochspannungsmastes aufgehängt sind und an deren freien Ende die Hochspannungsleitung befestigt ist.

Auch wenn die Hochspannungsisolatoren grundsätzlich ausreichend für die gewünschte Isolation zwischen Hochspannungsleitung und Hochspannungsmast ausgelegt sind, kommt es immer wieder zu sog. Erdschlüssen und Erdkurzschlüssen, bei denen ein Hochspannungsisolator überbrückt wird und die daran befestigte Hochspannungsleitung über den Hochspannungsmast mit der Erde verbunden wird. Je nach Sternpunktbehandlung des Hochspannungsnetzes und der Dauer der Netzstörung können diese einpoligen Fehler massive Auswirkungen auf nachgelagerte Netze und angeschlossene Verbraucher haben, weshalb es im Stand der Technik Bestrebungen gibt, diese Störungen zu reduzieren und die Betriebssicherheit zu erhöhen.

Da als eine Ursache für das Auftreten von Erdschlüssen und Erdkurzschlüssen auf den Hochspannungsisolatoren unmittelbar auftreffender oder abgelagerter Vogeldreck - insbesondere in Kombination mit Feuchtigkeit - identifiziert wurde, schlägt bspw. die technische Spezifikation der Internationalen Elektrotechnischen Kommission IEC/TS 60815-1:200 - Auswahl und Bemessung von Hochspannungsisolatoren für die Anwendung unter Verschmutzungsbedingungen - Teil 1: Begriffe, Informationen und allgemeine Grundlagen vor "... Abschreckungsvorrichtungen oder Vogelstangen anzubringen, die an die örtliche Fauna und an die Konstruktion angepasst sind", um zu vermeiden, dass sich Vögel oberhalb der Hochspannungsisolatoren auf den Hochspannungsmasten niederlassen, ihr Geschäft verrichten und so die Hochspannungsisolatoren verschmutzen. Es hat sich jedoch gezeigt, dass durch entsprechende Vorrichtungen Erdschlüsse und Erdkurzschlüsse nur in überschaubaren Umfang reduziert werden können.

Auch sind Schutzvorrichtungen bekannt, bei denen unmittelbar am Hochspannungsmast oberhalb der Hochspannungsisolatoren auf den Masttraversen Überdachungen vorgesehen werden, die zum Fernhalten von Vogeldreck von den Hochspannungsisolatoren ausgebildet sind. Auch wenn über entsprechende Überdachungen die Verschmutzung der Hochspannungsisolatoren deutlich reduziert werden kann, weisen die Überdachungen gemäß dem Stand der Technik einige Nachteile auf. So sind die Kosten für die Beschaffung und die Montage der Überdachungen erheblich, die Maststatik insbesondere bei Eis, Schnee und Starkwind wird negativ beeinflusst und Wartungsarbeiten an den Masttraversen und den Hochspannungsisolatoren werden erschwert.

In den Dokumenten JP H10 199350 A, CN 104 200 935 A, JP 2012 038736 A, US 4 201 883 A, US 5 679 922 A, EP 1 566 869 A1, US 6 291 774 B1 und WO 96/16416 A1 sind verschiedene Schutzvorrichtungen für Hochspannungsisolatoren bekannt, die am Hochspannungsisolator selbst befestigt sind und sich scheibenförmig um den Hochspannungsisolator erstrecken. Die Schutzvorrichtungen gemäß den Dokumenten US 4 201 883 A, US 5 679 922 A, EP 1 566 869 A1, US 6 291 774 B1 und WO 96/16416 A1 sind ausdrücklich für den Schutz von Kleintieren ausgebildet und nur bedingt als Verschmutzungsschutz geeignet. Die tatsächlich für den Verschmutzungsschutz vorgesehenen Vorrichtungen gemäß der Dokumente JP H10 199350 A, CN 104 200 935 A und JP 2012 038736 A erfordern eine aufwendige Montage.

Der Erfindung liegt daher die Aufgabe zugrunde, eine Vorrichtung zur wirksamen Reduzierung von Erdschlüssen und Erdkurzschlüssen an überirdischen Hochspannungsleitungen aufgrund von Vogeldreck zu schaffen, bei der die aus dem Stand der Technik bekannten Nachteile nicht mehr oder nur noch in vermindertem Umfang auftreten.

Gelöst wird diese Aufgabe durch eine Verschmutzungsschutzvorrichtung gemäß dem Anspruch 1 sowie durch eine Anordnung aus Verschmutzungsschutzvorrichtung und Hochspannungsisolator gemäß dem Anspruch 8. Vorteilhafte Weiterbildungen sind Gegenstand der abhängigen Ansprüche.

Demnach betrifft die Erfindung eine Verschmutzungsschutzvorrichtung für Hochspannungsisolatoren zur Befestigung an der Isolatorkappe des Hochspannungsisolators umfassend einen Befestigungsbereich, der für eine formschlüssige Verbindung mit der Isolatorkappe ausgebildet ist und eine Durchführungsöffnung für das Anschlusselement der Isolatorkappe aufweist, und einem Schutzschirm, der sich radial um den Befestigungsbereich erstreckt, um den Hochspannungsisolator zu überdecken, wobei im Befestigungsbereich oder am Schutzschirm wenigstens eine Lasche befestigt ist, wobei wenigstens eine Lasche derart schwenkbar im Befestigungsbereich oder am Schutzschirm befestigt ist, dass sie im abgesenkten Zustand über die Durchführungsöffnung ragt, und wobei die Lasche an ihrem freien Ende ein Teil eines Rastverschlusses zum Zusammenwirken mit einem entsprechenden Gegenstück, welches auf der gegenüberliegenden Seite der Durchführungsöffnung angeordnet ist, aufweist.

Die Erfindung betrifft weiterhin eine Anordnung umfassend einen Hochspannungsisolator mit Isolatorkappe und eine an der Isolatorkappe angeordnete Verschmutzungsschutzvorrichtung, wobei die Verschmutzungsschutzvorrichtung erfindungsgemäß ausgebildet ist und durch Formschluss mit der Isolatorkappe verbunden ist

Die erfindungsgemäße Verschmutzungsschutzvorrichtung bietet einen guten Schutz für durch Vögel verursachte Verschmutzung, wobei der Vogeldreck insbesondere durch den Schutzschirm vom Hochspannungsisolator ferngehalten wird. Die Erfindung hat erkannt, dass die bei Hochspannungsisolatoren - insbesondere wenn sie als Langstabisolatoren ausgebildet sind - zur Anbindung an einen Hochspannungsmast regelmäßig vorgesehenen Isolatorkappen besonders dazu geeignet sind, um daran eine Verschmutzungsschutzvorrichtung zu befestigen. Eine ausreichende Befestigung kann dabei bereits durch Formschluss zwischen dem Befestigungsbereich der Verschmutzungsschutzvorrichtung und der Isolatorkappe erreicht werden. Für das Anschlusselement der Isolatorkappe, mit dem die Isolatorkappe und damit der Hochspannungsisolator letztendlich an einem Hochspannungsmast befestigt werden, weist die Verschmutzungsschutzvorrichtung eine Durchführungsöffnung auf.

Eine bauliche Veränderung des Hochspannungsisolators, der Isolatorkappe und/oder dem Hochspannungsmast ist für die Installation einer erfindungsgemäßen Verschmutzungsschutzvorrichtung nicht erforderlich, sodass weiterhin auf normierte und bereits zugelassene Bauteile zurückgegriffen werden kann. Da die erfindungsgemäße Verschmutzungsschutzvorrichtung an der Isolatorkappe und damit an der Erdpotentialseite des Hochspannungsisolators angeordnet ist, muss sie auch keine besonderen elektrischen Anforderungen erfüllen. Auch kann die Formschlussverbindung zwischen Befestigungsbereich und Isolatorkappe bereits derart ausreichend sein, dass keine weiteren Befestigungselemente erforderlich sind. Insbesondere in diesem Fall ist für die eigentliche Montage der erfindungsgemäßen Verschmutzungsschutzvorrichtung häufig dann keinerlei Werkzeug erforderlich.

Indem sich der Schutzschirm radial um den Befestigungsbereich erstreckt, der mit der Isolatorkappe zusammenwirkt, ist sichergestellt, dass sich der Schutzschirm über den gesamten Umfang des Hochspannungsisolators erstreckt. Dabei ist erfindungsgemäß vorgesehen, dass der Schutzschirm den Hochspannungsisolator überdeckt, also derart dimensioniert ist, dass die Ausdehnung des Schutzschirms senkrecht zur Längsachse des Hochspannungsisolators in allen Richtungen gleich oder größer ist als die jeweilige größte Ausdehnung des Hochspannungsisolatorschafts bzw. der daran angeordneten Isolatorschirme.

Es ist bevorzugt, wenn der Befestigungsbereich hutförmig und zum Stülpen über die Isolatorkappe ausgebildet ist. Durch eine entsprechende Formgebung lässt sich ein besonders guter Formschluss zwischen Befestigungsbereich und Isolatorkappe erreichen. Der Begriff "hutförmig" umfasst dabei sowohl Ausführungsvarianten, bei denen sich der Schutzschirm am unteren Ende des hutförmigen Bereichs in Art einer "Krempe" anschließt, als auch solche, bei denen das Dachs des hutförmigen Bereichs unmittelbar in den Schutzschirm übergeht.

Es ist bevorzugt, wenn die Verschmutzungsschutzvorrichtung eine von der Durchführungsöffnung bis zur Außenkante des Schutzschirmes verlaufende radiale Montageöffnung zur seitlichen Durchführung des Anschlusselementes der Isolatorkappe der Verschmutzungsschutzvorrichtung aufweist. Durch eine entsprechende Montageöffnung lässt sich die Verschmutzungsschutzvorrichtung seitlich auf die Isolatorkappe aufschieben, sodass eine Montage der Verschmutzungsschutzvorrichtung selbst bei an einem Hochspannungsmast angebundener Isolatorkappe möglich ist. Da die Montage auf der Erdpotentialseite des Hochspannungsisolators erfolgt, ist hierfür ggf. nicht einmal eine Abschaltung der betroffenen Hochspannungsleitung erforderlich.

Ist die Verschmutzungsschutzvorrichtung ausreichend elastisch, kann es ausreichend sein, wenn die Montageöffnung als Schlitz - also als Spalt mit Breite Null - ausgeführt ist, sodass sich die Montageöffnung während der Montage weiten lässt. Vergleichbares gilt selbstverständlich auch, wenn die Montageöffnung als Spalt mit einer vorgegebenen Breite ausgestaltet ist, der sich - bei ausreichender Elastizität - während der Montage weiten lässt. Ist die Verschmutzungsschutzvorrichtung nicht (ausreichend) elastisch, sollte die Montageöffnung vorzugsweise eine ausreichende Minimalbreite aufweisen, um die Verschmutzungsschutzvorrichtung an der schmalsten Stelle der Isolatorkappe auf diese aufzuschieben. In beiden Fällen kann wenigstens eine, sich wahlweise über die Montageöffnung erstreckende Lasche vorgesehen sein, um die Montageöffnung gegen unbeabsichtigtes Hindurchgelangen der Isolatorkappe zu sichern und/oder der Verschmutzungsschutzvorrichtung zusätzliche Formstabilität zu verleihen.

Eine solche Lasche kann bspw. auf der einen Seite der Montageöffnung schwenkbar an der Verschmutzungsschutzvorrichtung, bspw. dem Schutzschirm, befestigt sein und an dem anderen Ende ein Teil eines Rastverschlusses - Rastelement oder Eingriffsöffnung - aufweisen. Auf der anderen Seite der Montageöffnung ist dann das Gegenstück zum Rastverschluss vorzusehen, mit dem das Teil des Rastverschlusses an der Lasche wahlweise zusammenwirken kann. Es kann alternativ vorgesehen sein, die Lasche als gesondertes Laschenelement auszuführen, welches an seinen beiden Enden jeweils einen Teil eines Rastverschlusses - Rastelement oder Eingriffsöffnung - aufweist. In diesem Fall sind geeignete Gegenstücke zu den Rastverschlüssen an der Verschmutzungsschutzvorrichtung zu beiden Seiten der Montageöffnung vorzusehen. Das Laschenelement kann über eine Materialbrücke verliersicher mit der Verschmutzungsschutzvorrichtung verbunden sein, wobei diese Materialbrücke bei der Montage gebogen oder zerstört werden kann.

Die Montageöffnung kann zur Durchführung von anderen Elementen des Hochspannungsisolators - bspw. der Halterung eines Lichtbogenschutzrings - abschnittsweise verbreitert sein. Dadurch kann eine dauerhafte Verformung der Verschmutzungsschutzvorrichtung im montierten Zustand vermieden werden.

Gemäß einer Ausführungsform der beanspruchten Erfindung ist vorgesehen, dass im Befestigungsbereich oder am Schutzschirm wenigstens eine Lasche befestigt ist. Insbesondere wenn die Isolatorkappe als Gabelkappe (vgl. bspw. DIN 48 062, Teil 2 vom August 1990) ausgestaltet ist, kann über eine entsprechende Lasche die Verschmutzungsschutzvorrichtung gegen ein unbeabsichtigtes Abheben des Befestigungsbereichs von der Isolatorkappe gesichert werden. Dazu kann die Lasche zwischen den Gabeln der Gabelkappe unterhalb des Befestigungsbolzens geführt werden.

In einer nicht zur beanspruchten Erfindung gehörenden Ausführungsform kann sich das freie Ende der Lasche über die Durchführungsöffnung hinaus wenigstens bis zur Außenkante des Schutzschirmes erstrecken, wobei die Lasche vorzugsweise parallel zur und überlappend mit der Montageöffnung verlaufend angeordnet ist. Dadurch wird erreicht, dass sich die Lasche - auch wenn sie wie beschrieben durch die Gabelkappe gesteckt ist - über die Montageöffnung erstreckt und so der Abdeckung der Montageöffnung dient. Insbesondere wenn die Montageöffnung als Spalt ausgeführt ist, kann die Lasche also den Spalt abdecken, um so einen vollständig geschlossenen Schutzschirm sicherzustellen. Bei Bedarf kann die Lasche in diesem Bereich an dem Schutzschirm lösbar oder unlösbar befestigt werden, bspw. durch Kleben.

Bei dieser nicht zur beanspruchten Erfindung gehörenden Ausführungsform ist weiterhin bevorzugt, wenn die Breite der Lasche an die Breite der Montageöffnung angepasst und das freie Ende der Lasche zum Verschließen der radialen Montageöffnung vorgesehen ist, wobei die Kanten der Montageöffnung vorzugsweise jeweils eine Führung für die Lasche aufweisen. In anderen Worten kann die Lasche - bspw. nach dem Durchführen durch eine Gabelkappe - in die seitlichen Führungen der Montageöffnung hindurchgeführt werden, wodurch einerseits die Montageöffnung geschlossen wird und andererseits das freie Ende der Lasche an dem Schutzschirm gesichert wird. Insbesondere in diesem Fall ist eine vollständig werkzeugfreie Montage und Sicherung der Verschmutzungsschutzvorrichtung möglich.

Erfindungsgemäß ist die wenigstens eine Lasche schwenkbar im Befestigungsbereich oder am Schutzschirm befestigt ist, sodass sie im abgesenkten Zustand über die Durchführungsöffnung ragt. Die Lasche weist dabei an ihrem freien Ende ein Teil eines Rastverschlusses - Rastelement oder Eingriffsöffnung - auf. Auf der gegenüberliegenden Seite der Durchführungsöffnung ist das Gegenstück zum Rastverschluss vorgesehen, mit dem das Teil des Rastverschlusses an der Lasche wahlweise zusammenwirken kann. In diesem Fall verläuft die Lasche vorzugsweise nicht parallel zur Montageöffnung, damit das Gegenstück zum Rastverschluss nicht mit der Montageöffnung zusammenfällt. Es ist auch möglich, mehrere entsprechende Laschen und ggf. Gegenstücke zum Rastverschluss vorzusehen, die dann bevorzugt winkelversetzt gegenüber der Durchführungsöffnung angeordnet sind. Durch entsprechende mehrerer Laschen kann die Verschmutzungsschutzvorrichtung für unterschiedliche Bauformen von Hochspannungsisolatoren bzw. Isolatorkappen verwendet werden, wobei in der Regel nur eine der mehreren Laschen tatsächlich zur Sicherung der Verschmutzungsschutzvorrichtung verwendet wird. Die nicht verwendeten Laschen können von der Verschmutzungsschutzvorrichtung abgetrennt und entfernt werden. Sind im Befestigungsbereich oder am Schutzschirm Öffnungen zum Eingriff von Rastelementen an den freien Enden von Laschen vorgesehen, in die nach der Montage keine Lasche eingreift, können die Endbereiche von nicht verwendeten Laschen abgetrennt und mit ihren Rastelementen als Verschluss in diesen Öffnungen befestigt werden.

In einer weiteren nicht zur beanspruchten Erfindung gehörenden kann ein gesondertes Laschenelement vorgesehen sein, welches an seinen beiden Enden jeweils einen Teil eines Rastverschlusses - Rastelement oder

Eingriffsöffnung - aufweist. Gegenstücke zu den Rastverschlüssen sind dann an geeigneten Positionen an der Verschmutzungsschutzvorrichtung, bspw. dem Schutzschirm, um die Durchführungsöffnung anzuordnen, sodass sich das Laschenelement, wenn es mit seinen beiden Enden an der Verschmutzungsschutzvorrichtung befestigt ist, über die Durchführungsöffnung erstreckt. Das Laschenelement kann über eine Materialbrücke verliersicher mit der Verschmutzungsschutzvorrichtung verbunden sein, wobei diese Materialbrücke bei der Montage gebogen oder zerstört werden kann.

Bei anderen Ausführungen der Isolatorkappe - bspw. als Pfannenkappe gemäß DIN 48 062, Teil 1 vom August 1990 - kann es vorteilhaft sein, wenn die Lasche an ihrem freien Ende eine Durchführungsöffnung für einen Sicherungssplint oder ein Ösenelement aufweist. In diesem Fall wird die Lasche im Regelfall nicht durch die Isolatorkappe geführt, sondern liegt an dieser an, wobei die Lasche über einen Sicherungssplint an der Isolatorkappe befestigt werden kann. Der Sicherungssplint kann dabei unmittelbar durch die Durchführungsöffnung geführt sein. Alternativ ist es möglich, dass durch die Durchführungsöffnung die Öse eines Ösenelements geführt ist, durch die der Sicherungssplint geführt ist, wobei das Ösenelement auf der von der Öse abgewandten Seite die Durchführungsöffnung hintergreift. Bei dem Sicherungssplint kann es sich insbesondere um einen für die Befestigung der Isolatorkappe bereits grundsätzlich vorgesehenen Sicherungssplint handeln, sodass also weder ein zusätzlicher Sicherungssplint noch eine evtl. bauliche Veränderung der Isolatorkappe zur Befestigung eines zusätzlichen Sicherungssplintes erforderlich wäre.

Es ist bevorzugt, wenn der Schutzschirm im Wesentlichen kreisförmig ausgestaltet ist. Ist an dem Hochspannungsisolator ein Lichtbogen-Schutzring vorgesehen, ist es weiter bevorzugt, wenn der Radius des Schutzschirmes im Wesentlichen dem Außenradius des Lichtbogen-Schutzrings entspricht. Bei einem Lichtbogen-Schutzring handelt es sich um einen auf der Höhe der Isolatorkappe und damit oberhalb des Hochspannungsisolators montierten verzinkten Metallring, der im Falle eines Lichtbogens parallel zum Hochspannungsisolator einen Lichtbogenfußpunkt bildet, über den der Lichtbogenstrom in die Erde abgeleitet wird. Der Lichtbogen-Schutzring dient dabei in erster Linie dazu, den Lichtbogen von dem eigentlichen Hochspannungsisolator fernzuhalten, um Beschädigung daran zu vermeiden. Da bei Auftreten eines Lichtbogens große Hitze freigesetzt wird, ist es vorteilhaft, wenn sich der Schutzschirm der erfindungsgemäßen Verschmutzungsschutzvorrichtung nicht über den Lichtbogen-Schutzring hinaus erstreckt. Die bei einem Lichtbogen auftretende Hitze kann dann gut entweichen, ohne dass die Verschmutzungsschutzvorrichtung durch die Hitzeentwicklung beschädigt werden würde.

Es ist bevorzugt, wenn der Schutzschirm derart nach außen geneigt ist, dass im montierten Zustand Regenwasser nach außen abfließt. Durch eine entsprechende Neigung kann auf dem Schutzschirm evtl. befindlicher Vogeldreck abgewaschen werden, wodurch eine natürliche Reinigung des Schutzschirms erreicht wird. Die Neigung des Schutzschirms beträgt vorzugsweise 10° bis 30°, weiter vorzugsweise 20° gegenüber der Horizontalen.

Es ist weiter bevorzugt, wenn an der Außenkante des Schutzschirmes eine Tropfkante vorgesehen ist. Dadurch kann sichergestellt werden, dass über den Schutzschirm abfließendes Regenwasser oder davon aufgeweichter Vogeldreck nicht an der Unterseite des Schutzschirmes nach Innen und in der Folge auf den Hochspannungsisolator gelangt. Die Tropfkante kann auch als Randelement ausgebildet sein, welches eine ausreichende Breite aufweist, um daran eine, sich über die Montageöffnung erstreckende Lasche vorzusehen, die vorzugsweise vergleichbar mit den anderen bereits oben beschriebenen Laschen zum wahlweise Verschließen der Montageöffnung an ihrem freien Ende einen Teil eines Rastverschlusses aufweist, der wahlweise mit einem entsprechenden Gegenstück jenseits der Montageöffnung zusammenwirken kann.

Wie bereits ausgeführt, kann der Schutzschirm an dem von der Durchführungsöffnung entfernten Ende des Befestigungsbereiches angeordnet sein. Alternativ ist der Schutzschirm auf Höhe der Durchführungsöffnung vorgesehen. In beiden Fällen der hutförmigen Ausgestaltung des Befestigungsbereiches lässt sich die erfindungsgemäße Verschmutzungsschutzvorrichtung einfach herstellen und weist aufgrund des durch den Befestigungsbereich erreichten Formschluss eine gute Befestigungssicherheit auf.

Befestigungsbereich, Schutzschirm und/oder Lasche können einstückig ausgeführt sein. Die Verschmutzungsschutzvorrichtung ist vorzugsweise ganz oder teilweise aus Kunststoff, vorzugsweise aus spritzgussfähigem Kunststoff. Dabei ist der Kunststoff vorzugweise Wetter- und UV-Beständig und weist außerdem eine gute Beständigkeit gegen Vogeldreck auf. Es ist aber auch möglich, dass die Verschmutzungsschutzvorrichtung ganz oder teilweise aus verzinktem Stahlblech ist.

Zur Erläuterung der erfindungsgemäßen Anordnung wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: eine schematische Darstellung eines Hochspannungsmastes umfassend erfindungsgemäße Anordnungen aus Hochspannungsisolatoren mit erfindungsgemäßen Verschmutzungsschutzvorrichtungen;
- Figur 2a-c:: Schematische Darstellungen eines ersten Ausführungsbeispiels einer nicht-erfindungsgemäßen Anordnung aus Hochspannungsisolator und erfindungsgemäßer Verschmutzungsschutzvorrichtung;
- Figur 3:: eine schematische Darstellung eines zweiten Ausführungsbeispiels einer nicht-erfindungsgemäßen Anordnung aus Hochspannungsisolator und erfindungsgemäßer Verschmutzungsschutzvorrichtung;
- Figur 4a-c:: schematische Darstellungen eines dritten Ausführungsbeispiels einer nicht-erfindungsgemäßen Anordnung aus Hochspannungsisolator und erfindungsgemäßer Verschmutzungsschutzvorrichtung;
- Figur 5a,b:: schematische Darstellungen eines weiteren Ausführungsbeispiels einer erfindungsgemäßen Verschmutzungsschutzvorrichtungen; und
- Figur 6a-d:: schematische Darstellung der Montage einer Verschmutzungsschutzvorrichtung gemäß Figur 5a,b auf einem Hochspannungsisolator.

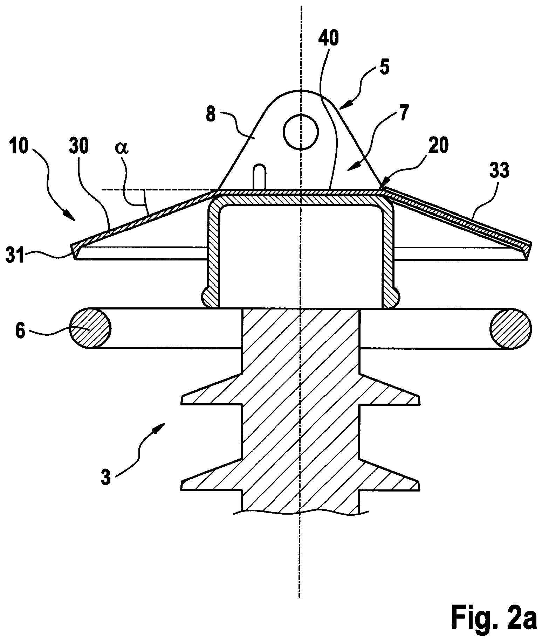

Die Figuren 2a-c, 3 und 4a, b zeigen dabei keine Ausführungsformen der beanspruchten Erfindung, sind für deren grundsätzliches Verständnis aber hilfreich.

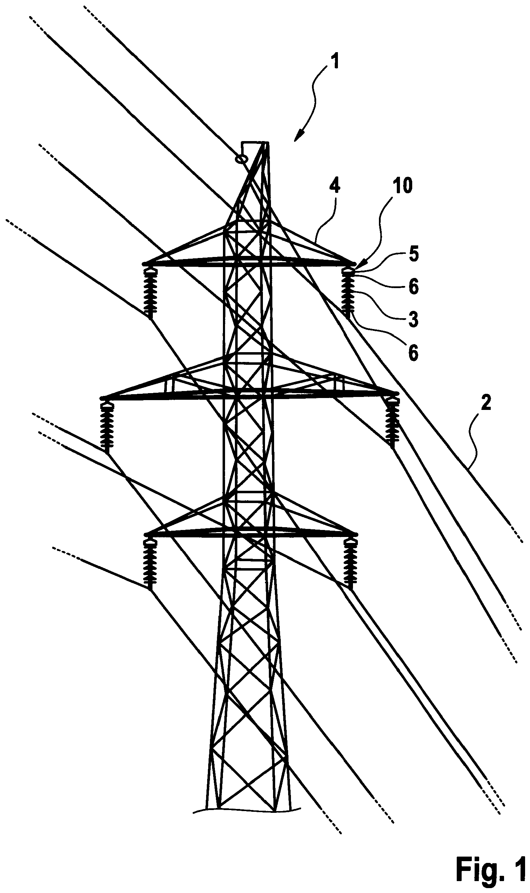

In Figur 1 ist ein Hochspannungsmast 1 mit daran aufgehängten Hochspannungsleitungen 2 dargestellt. Die Hochspannungsleitungen 2 sind über Hochspannungsisolatoren 3 an den Traversen 4 befestigt, welche die Hochspannungsleitungen 2 elektrisch von dem Hochspannungsmast 1 und damit dem Erdpotential trennen. Zur Befestigung der Hochspannungsisolatoren 3 an den Traversen 4 weisen diese Isolatorkappen 5 auf.

An den Hochspannungsisolatoren 3 ist am oberen und unteren Ende jeweils ein Lichtbogen-Schutzring 6 vorgesehen, zwischen denen ein evtl. entstehender Lichtbogen über den Hochspannungsisolator 3 hinweggeführt wird, um den Hochspannungsisolator 3 selbst nicht zu beschädigen.

Am oberen Ende jedes Hochspannungsisolators 3 ist weiterhin eine erfindungsgemäße Verschmutzungsschutzvorrichtung 10 vorgesehen.

In Figur 2a das obere Ende einer Anordnung aus Hochspannungsisolator 3 und Verschmutzungsschutzvorrichtung 10, wie sie bei dem Hochspannungsmast 1 gemäß Figur 1 eingesetzt ist, in einer Schnittdarstellung detaillierter gezeigt.

Der Hochspannungsisolator 3 umfassend einen Schaft und angeordnete Isolatorschirme ist fest mit der Isolatorkappe 5 verbunden, die in diesem Ausführungsbeispiel als Gabelkappe ausgeführt ist, d. h. als Anschlusselement 7 sind zwei parallel angeordnete Gabelbleche 8 mit zueinander fluchtenden Bolzendurchführungsöffnungen vorgesehen. Die Anbindung an den Hochspannungsmast 1 erfolgt über einen geeigneten Bolzen (nicht dargestellt).

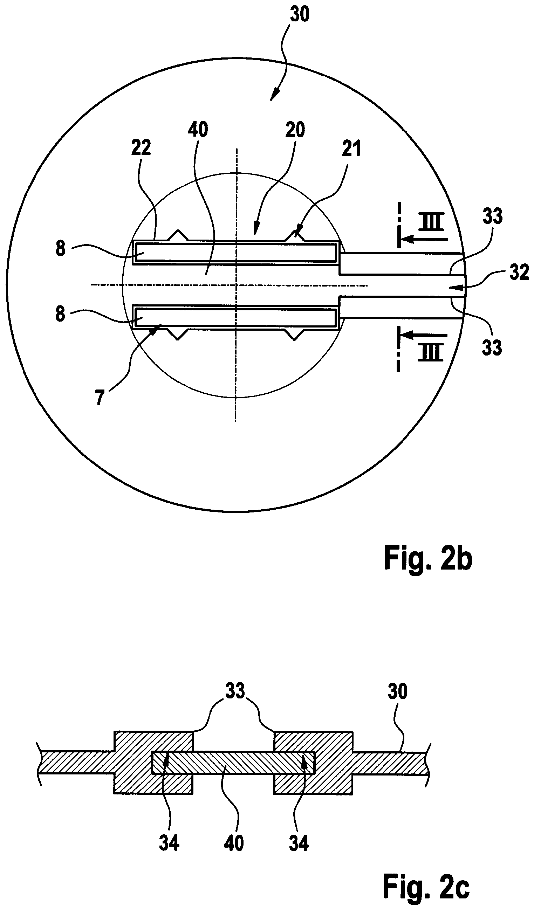

Die Verschmutzungsschutzvorrichtung 10, die in Figur 2b auch in eine Draufsicht dargestellt ist, umfasst einen Befestigungsbereich 20 und einen Schutzschirm 30.

Der Befestigungsbereich 20 umfasst eine Durchführungsöffnung 21 für das Anschlusselement 7, deren Begrenzung 22 als Umhüllende formschlüssig an den beiden Gabelblechen 8 anliegt. Dadurch wird eine formschlüssige Verbindung zwischen Verschmutzungsschutzvorrichtung 10 und Isolatorkappe 5 geschaffen.

Um den Befestigungsbereich 20 ist der Schutzschirm 30 angeordnet. Der Schutzschirm 30 ist kreisförmig und derart um a = 20° nach außen geneigt, dass Regenwasser über den Schutzschirm 30 und dessen umlaufende Tropfkante 31 abtropfen kann. Der Radius des Schutzschirmes 30 entspricht dabei im Wesentlichen dem Außenradius des Lichtbogen-Schutzrings 6. Der Schutzschirm 30 überdeckt damit den Hochspannungsisolator 3 und den Lichtbogenschutzring 6 derart, dass von dem Schutzschirm 30 abtropfendes Wasser, welches ggf. Teile von durch den Schutzschirm 30 aufgefangenen Vogeldreck mitführt, grundsätzlich nicht auf den Hochspannungsisolator 3 auftrifft und auch ein unmittelbar von einem Großvogel (z.B. Storch oder Reiher) abgesetzter Vogeldreck, der von der Menge ausreichen kann, die Luftstrecke zwischen den beiden mit Erd- bzw. Hochspannungspotenzial beaufschlagten Lichtbogen-Schutzringen 6 zu überbrücken, keinen Kurzschluss verursachen kann.

In dem Schutzschirm 30 und dem Befestigungsbereich 20 ist eine radial verlaufende Montageöffnung 32 zur seitlichen Durchführung des Anschlusselementes 7 der Isolatorkappe 5 vorgesehen. Diese Montageöffnung 32 führt von der Durchführungsöffnung 21 im Befestigungsbereich 20 bis zur Außenkante des Schutzschirmes 30 und ist als Spalt ausgestaltet. Die Breite des Spaltes ist dabei geringer als die Ausdehnung des hindurchzuführenden Anschlusselementes 7, allerdings ist die gesamte Verschmutzungsschutzvorrichtung 10 derart elastisch verformbar, dass sich die Montageöffnung 32 zur seitlichen Durchführung des Anschlusselementes 7 der Isolatorkappe 5 weiten lässt. Die Verschmutzungsschutzvorrichtung 10 lässt sich so nachträglich auch an bereits montierten Hochspannungsisolatoren 3 anbringen.

An dem Befestigungsbereich 20 ist weiterhin eine Lasche 40 befestigt, deren freies Ende sich über die Durchführungsöffnung 21 hinaus bis zur Außenkante des Schutzschirmes 30 erstreckt. Die Lasche 40 wird zwischen den beiden Gabelblechen 8 der Isolatorkappe 5 hindurchgeführt und kann an diesen formschlüssig anliegen. Die Lasche 40 verläuft weiterhin parallel zur und überlappend mit der Montageöffnung 32 und schließt somit den dort vorgesehen Spalt. Wie insbesondere im Teilschnitt gemäß Figur 2c entlang der Linie III-III aus Figur 2b zu sehen, weisen die Kanten 33 der Montageöffnung 32 dabei Führungen 34 auf, in welche die Lasche 40 eingeführt ist. Die Breite der Lasche 40 ist dabei an die Breite der Montageöffnung 32 bzw. deren Führungen 34 angepasst. Ist die Lasche 40, wie dargestellt, in die Führungen 34 eingeführt, wird die Montageöffnung 32 derart verschlossen, dass flüssiger oder durch Regenwasser verflüssigter Vogeldreck nicht durch die Montageöffnung 32 auf den Hochspannungsisolator 3 gelangen kann. Gleichzeitig wird ein unerwünschtes Abheben der Verschmutzungsschutzvorrichtung 10 von der Isolatorkappe 5, im Zusammenspiel mit dem durch das Anschlusselement 7 geführten Befestigungsbolzen und der unterhalb des Befestigungsbolzens durchgeführten Lasche 40 zumindest aber eine Verlustsicherung erreicht.

Der Befestigungsbereich 20, der Schutzschirm 30 und die Lasche 40 sind einstückig z.B. in einem Spritzgussverfahren aus Kunststoff hergestellt, wobei der Kunststoff für den vorgesehenen Einsatzzweck ausreichend wetter- und UV-beständig ausgewählt ist und trotz grundsätzlicher Formbeständigkeit ausreichend elastisch, um die oben beschriebene Weitung der Montageöffnung 32 zu ermöglichen.

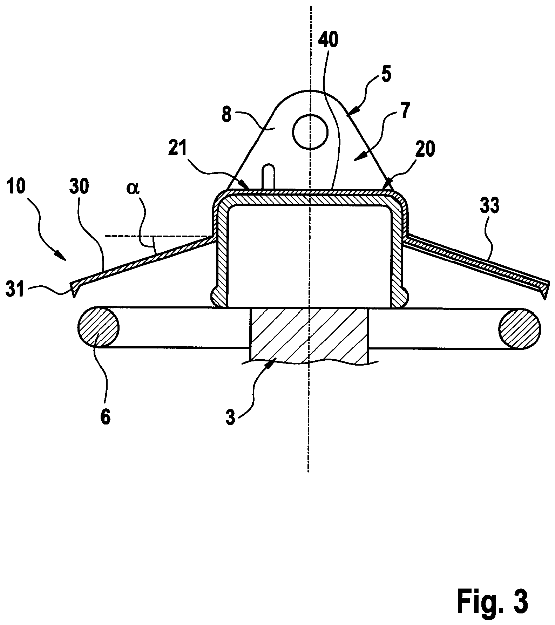

In Figur 3 ist eine zu Figur 2a-c vergleichbare Anordnung aus Hochspannungsisolator 3 und Verschmutzungsschutzvorrichtung 10 gezeigt, wobei die Verschmutzungsschutzvorrichtung 10 jedoch leicht abweichend ausgeführt ist. Im Folgenden wir daher lediglich auf die Unterschiede der in Figur 3 gezeigten Ausführungsform gegenüber der Ausführungsform gemäß Figur 2a-c eingegangen, während im Übrigen auf die vorstehenden Erläuterungen verwiesen wird.

Wie unmittelbar in Figur 3 zu erkennen, ist der Befestigungsbereich 20 hutförmig und zum Stülpen über die Isolatorkappe 5 ausgebildet. Durch diese Formgebung wird der Formschluss zwischen Verschmutzungsschutzvorrichtung 10 und Isolatorkappe 5 weiter verbessert. Der Schutzschirm 30 ist dabei an dem von der Durchführungsöffnung 21 entfernten Ende des Befestigungsbereiches 20 angeordnet, was für die Spritzgussfertigung vorteilhaft ist. In Figur 3 ist weiterhin zu erkennen, dass die Lasche 40 in ihrer Formgebung an die Hutform des Befestigungsbereiches 20 angepasst ist. Auch dies erleichtert die Fertigung und vermeidet darüber hinaus unnötige Spannungen innerhalb Verschmutzungsschutzvorrichtung 10 im Einsatzzustand, wie er in Figur 3 dargestellt ist. Im Übrigen ist die Verschmutzungsschutzvorrichtung 10 wie in Zusammenhang mit Figur 2a-c beschrieben ausgeführt.

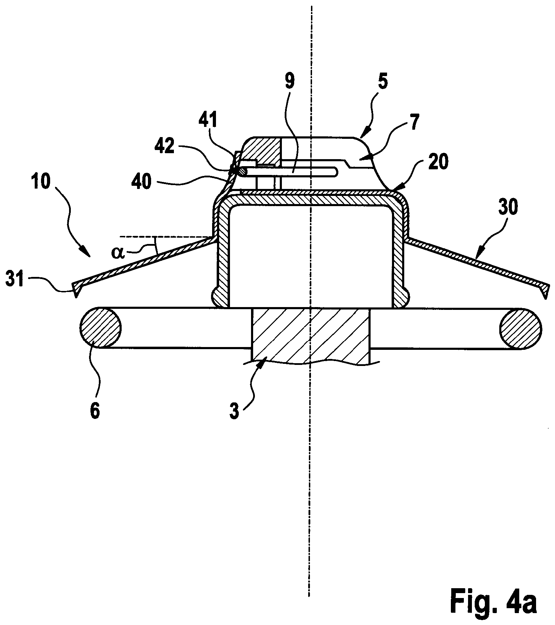

In Figur 4a-c ist eine weitere Ausführungsform dargestellt. Im Unterschied zu den Ausführungsformen gemäß Figuren 2a-c und 3 weist der Hochspannungsisolator 3 jedoch keine Gabelkappe, sondern vielmehr einen Pfannenkappe als Isolatorkappe 5 auf, woraus sich einige Unterschiede auch bei der Verschmutzungsschutzvorrichtung 10 ergeben.

Auch wenn die Durchführungsöffnung 21 in dem Befestigungsbereich 20 für die Durchführung des Anschlusselementes 7 entsprechend angepasst ist und grundsätzlich an diesem anliegen kann (nicht dargestellt), wird der Formschluss zwischen Befestigungsbereich 20 und der Isolatorkappe 5 im Wesentlichen durch die hutförmige und zum Stülpen über die Isolatorkappe 5 geeignete Ausgestaltung des Befestigungsbereiches 20 erreicht.

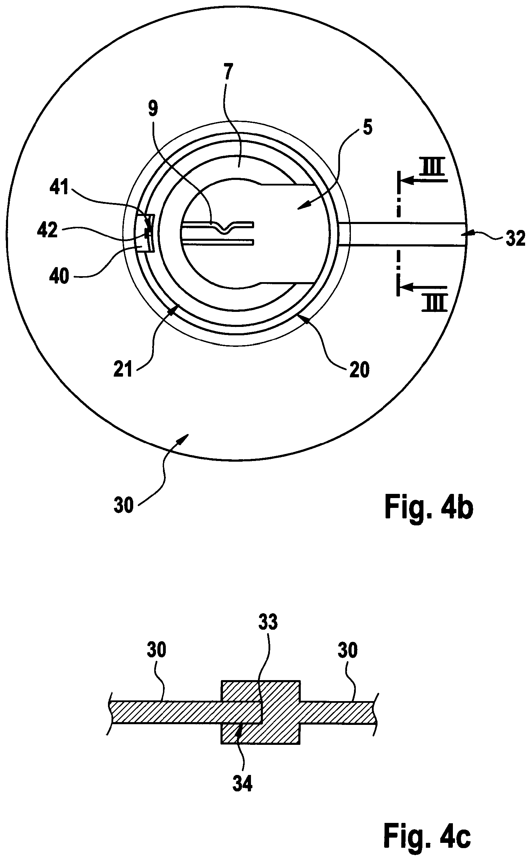

An der von der Durchführungsöffnung 21 entfernten Seite des Befestigungsbereiches ist der Schutzschirm 30 angeordnet. Der Schutzschirm 30 ist vergleichbar zu dem Schutzschirm aus Figuren 2a-c und 3 dimensioniert, geneigt und mit einer Tropfkante 31 versehen. Diesbezüglich wird daher auf die vorstehenden Ausführungen verwiesen. Die Montageöffnung 32 ist hingegen nicht als breiter Spalt, sondern lediglich als Schlitz (also als Spalt mit Breite Null) ausgeführt. Da die Verschmutzungsschutzvorrichtung 10 wie die vorherigen Vorrichtungen aus grundsätzlich formstabilen, wenn auch ausreichend elastischem Kunststoff einstückig im Spritzgussverfahren hergestellt ist, lässt sich die Montageöffnung 32 aber ausreichend weiten, um die Verschmutzungsschutzvorrichtung 10 im montierten Zustand des Hochspannungsisolators 3 seitlich auf die Isolatorkappe 5 aufschieben zu können. Wie im Teilschnitt gemäß Figur 4c entlang der Linie III-III aus Figur 4b zu sehen, weist dabei eine Kante 33 der Montageöffnung 32 eine Führung 34 auf, in welche die andere Kante 33 eingeführt ist. Dadurch wird ein lösbarer Verschluss der als Schlitz ausgestalteten Montageöffnung 32 erreicht, mit dem die Stabilität der Verschmutzungsschutzvorrichtung 10 erhöht werden kann. Außerdem wird die Montageöffnung 32 abgedichtet, sodass bspw. flüssiger oder durch Regenwasser verflüssigter Vogeldreck nicht durch die Montageöffnung 32 auf den Hochspannungsisolator 3 gelangen kann.

Die am Befestigungsbereich 20 befestigte Lasche 40 ist im eingebauten Zustand an dem Anschlusselement 7 hochgeführt und weist eine Durchgangsöffnung 41 auf, durch die ein Ösenelement 42 geführt ist. Durch die Öse des Ösenelementes 42 ist der bei Pfannenkappen übliche Sicherungssplint 9 zur Sicherung des Klöppels (nicht dargestellt) in dem Anschlusselement 7 geführt, wobei das Ösenelement 42 mit seinem anderen Ende die Durchgangsöffnung 41 hintergreift, sodass die Lasche 40 an dem Sicherungssplint 9 befestigt ist. Dadurch wird die Verschmutzungsschutzvorrichtung 10 an dem Hochspannungsisolator 3 bzw. dessen Isolatorkappe 5 gesichert.

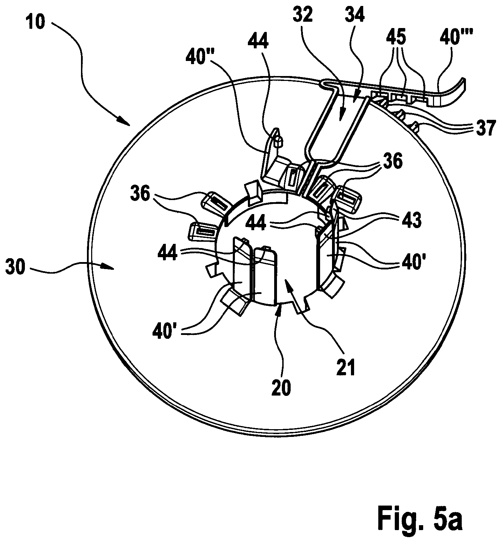

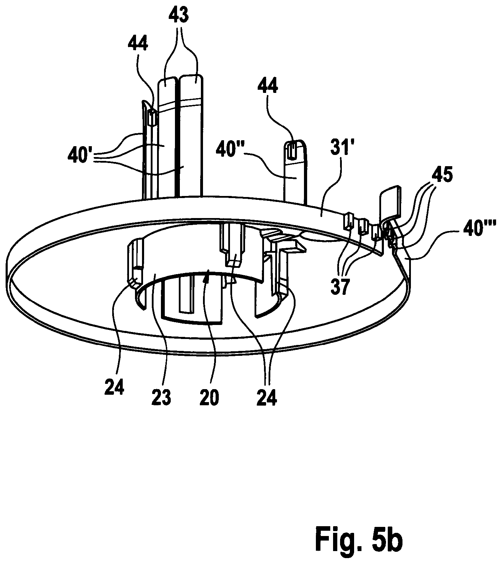

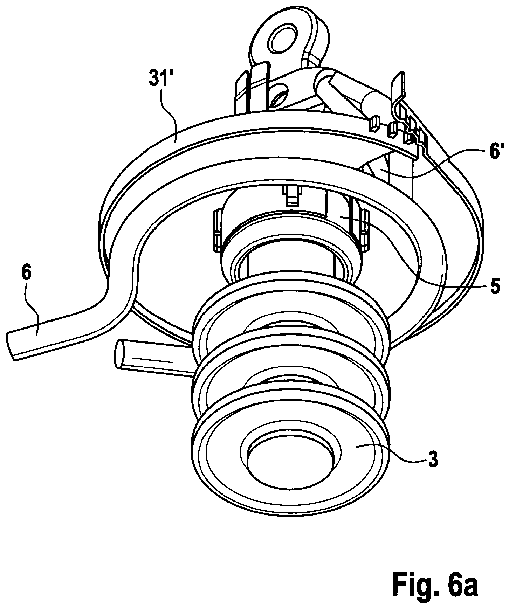

In Figur 5a,b ist eine Ausführungsform einer erfindungsgemäßen Verschmutzungsschutzvorrichtung 10 dargestellt, deren Verwendung an einem Hochspannungsisolator 3 in Figur 6a-d dargestellt ist.

Die Verschmutzungsschutzvorrichtung 10 umfasst einen Befestigungsbereich 20 mit einer Durchführungsöffnung 21 für das Anschlusselement 7 eines Hochspannungsisolators 3, welche das gesamte Dach des hutförmigen Befestigungsbereichs 20 einnimmt. Die Seitenwände 23 des Befestigungsbereichs 20 sind geschlitzt und weisen an ihrer Außenseite Durchführungen 24 auf, durch die bei Bedarf ein UV-beständiger Kabelbinder gezogen werden kann, um die an sich formschlüssige Verbindung zwischen Befestigungsbereich 20 und einer dadurch hindurchgeführten Isolatorkappe 5 zusätzlich zu sichern.

Der Schutzschirm 30 erstreckt sich ausgehend von dem Dach des Befestigungsbereichs 20 und ist nach außen geneigt, sodass bei ordnungsgemäßer Verwendung Regenwasser nach außen und über die am äußeren Rand des Schutzschirmes 30 als Randelement 31' ausgebildete Tropfkante 31 abfließen kann. Der Schutzschirm 30 weist eine radial verlaufende Montageöffnung 32 auf, durch die zu Montagezwecken das Anschlusselement 7 einer Isolatorkappe 5 hindurchgeführt werden kann. Die einstückig ausgeführte Verschmutzungsschutzvorrichtung 10 ist aus derart elastischem Material hergestellt, dass sich die Montageöffnung 32 hierfür ausreichend weiten lässt. Außerdem weist die Montageöffnung 32 noch einen verbreiterten Abschnitt 34 auf, durch den die Halterung 6` eines Lichtbogenschutzrings 6 des Hochspannungsisolators 3 geführt werden kann, ohne dass die Verschmutzungsschutzvorrichtung 10 hierfür verformt werden müsste (vgl. Figur 6a-d).

An der Verschmutzungsschutzvorrichtung 10 sind verschiedene Laschen 40 vorgesehen.

Ein Teil der Laschen 40 - nachfolgend und in den Figuren zur besseren Unterscheidbarkeit mit 40' bezeichnet - ist derart schwenkbar am Schutzschirm 30 befestigt, sodass sie im abgesenkten Zustand über die Durchführungsöffnung 21 ragen. Die Laschen 40' weisen an ihren freien Enden 43 Rastelemente 44 auf, mit denen sie wahlweise in entsprechende Öffnungen 36 am Schutzschirm 30 nach dem Prinzip eines Rastverschlusses eingreifen können. Die fraglichen Laschen 40' sind winkelversetzt gegenüber der Durchführungsöffnung 21 angeordnet, sodass die Verschmutzungsschutzvorrichtung 10 mit verschiedenen Hochspannungsisolatoren 3 bzw. Konfigurationen verwendet werden kann.

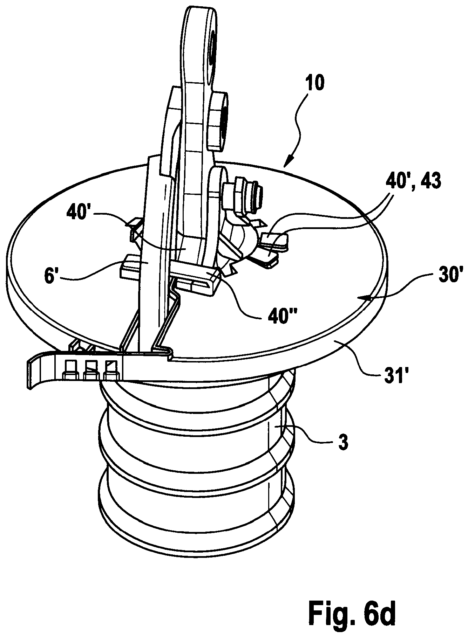

Die Laschen 40' können - sofern sie nicht benötigt werden - einfach abgetrennt werden, bspw. mit Hilfe eines Seitenschneiders. Von abgetrennten Laschen 40' können wiederum die Enden 43 mit den Rastelementen 44 abgetrennt und anschließend als Verschluss der nicht zur Bildung eines Rastversschlusses benötigten Öffnungen 36 verwendet werden (vgl. Figur 6d).

Eine weitere Lasche 40 bzw. 40", die analog zu den Laschen 40' ausgeführt ist, erstreckt sich im abgesenkten Zustand über die Montageöffnung 32 und kann mit ihrem Rastelement 44 in die dafür vorgesehene Öffnung 36 am Schutzschirm 30 zur Bildung eines Rastverschlusses eingreifen. Die Lasche 40" ist dabei so angeordnet, dass sie im abgesenkten Zustand zumindest einzelne zuvor abgesenkte Laschen 40' zusätzlich sichern kann, indem sie sich über die fraglichen Lasche 40` legt.

Auch die schwenkbar an dem Randelement 31' angeordnete Lasche 40 bzw. 40‴ erstreckt sich über die Montageöffnung 32. Allerdings weist diese Lasche 40‴ an ihrem freien Ende 43 kein Rastelement, sondern vielmehr Eingriffsöffnungen 45 auf, in die an dem Randelement 32 vorgesehene Rastelemente 37 zur Bildung eines Rastverschlusses eingreifen können. Zur Erhöhung der Verschlusssicherheit umfasst die Lasche 40‴ dabei mehrere Eingriffsöffnungen 45, die mit entsprechenden mehreren Rastelemente 37 zusammenwirken.

Anhand der Figuren 6a-d wird nun die Montage der in Figur 5a,b gezeigten Verschmutzungsschutzvorrichtung 10 auf einen Hochspannungsisolator 3 erläutert. Von dem Hochspannungsisolator 3 ist in Figuren 6a-d lediglich der obere Teil dargestellt.

Die Verschmutzungsschutzvorrichtung 10 wird zunächst mit seinem hutförmigen Befestigungsbereich auf die Isolatorkappe 5 des Hochspannungsisolators 3 aufgesetzt. Bei vollständig montiertem Hochspannungsisolator 3 wird dazu die Montageöffnung 32 des Schutzschirms 30 derart gedehnt, dass das Anschlusselement 7 hindurchgeführt werden kann, sodass die Verschmutzungsschutzvorrichtung 10 zunächst seitlich auf den Hochspannungsisolator 3 aufgesetzt werden kann, bevor anschließend durch Verschieben der Verschmutzungsschutzvorrichtung 10 in axialer Richtung des Hochspannungsisolators 3 ein Formschluss zwischen Befestigungsbereich 21 und Isolatorkappe 5 erreicht wird. Die Halterung 6` des Lichtbogenschutzrings 6 ist dabei durch den verbreiterten Abschnitt 34 der Montageöffnung geführt.

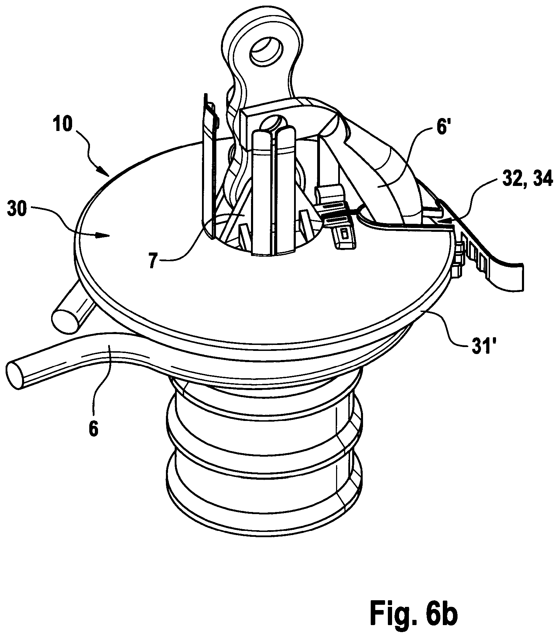

Der Zustand der Verschmutzungsschutzvorrichtung 10 nach dem initialen Aufsetzen auf den Hochspannungsisolator 3 ist in Figuren 6a,b gezeigt.

Wie insbesondere aus Figur 6b unmittelbar ersichtlich, ist lediglich eine der Laschen 40' geeignet angeordnet, um durch das Anschlusselement 7 der Isolatorkappe 5 geführt zu werden. Diese Lasche 40' wird durch das Anschlusselement 7 und mit seinem Rastelement 44 in die entsprechende Öffnung 36 in dem Schutzschirm 30 geführt. Anschließend wird die Lasche 40" abgesenkt und der entsprechende Rastverschluss ebenfalls geschlossen. Die übrigen Laschen 40' werden mit einem Seitenschneider abgetrennt, wobei die Enden 43 der Laschen 40', die das Rastelement 44 umfassen, nochmals abgetrennt werden, um auf die freien Öffnungen 36 im Schutzschirm 36 als Verschluss eingesetzt zu werden.

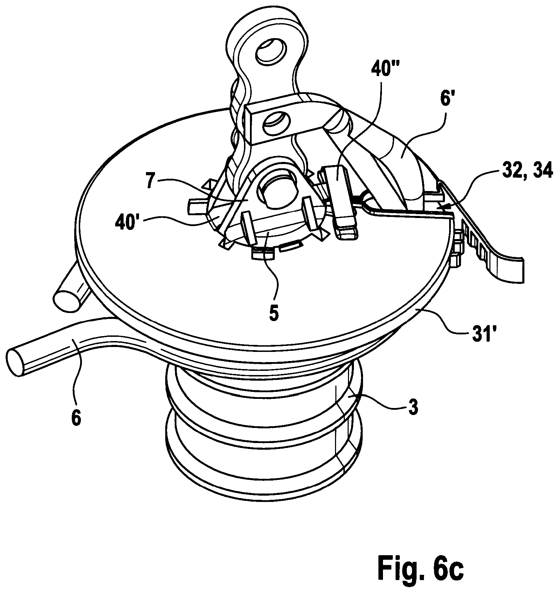

Der Zustand der Verschmutzungsschutzvorrichtung 10 nach diesen Montageschritten ist in Figuren 6c,d gezeigt.

Zuletzt wird nur noch die Lasche 40‴ geschlossen (nicht dargestellt). Insbesondere die Laschen 40" und 40‴ erhöhen, wenn geschlossen, die Formstabilität der einstückig aus elastischem Material hergestellten Verschmutzungsschutzvorrichtung 10.

## Patentansprüche

1. Verschmutzungsschutzvorrichtung (10) für Hochspannungsisolatoren (3) zur Befestigung an der Isolatorkappe (5) des Hochspannungsisolators (3) umfassend einen Befestigungsbereich (20), der für eine formschlüssige Verbindung mit der Isolatorkappe (5) ausgebildet ist und eine Durchführungsöffnung (21) für das Anschlusselement (7) der Isolatorkappe (5) aufweist, und einem Schutzschirm (30), der sich radial um den Befestigungsbereich (20) erstreckt, um den Hochspannungsisolator (3) zu überdecken,
wobei im Befestigungsbereich (20) oder am Schutzschirm (30) wenigstens eine Lasche (40', 40", 40‴) befestigt ist,
**dadurch gekennzeichnet, dass**
wenigstens eine Lasche (40') derart schwenkbar im Befestigungsbereich (20) oder am Schutzschirm (30) befestigt ist, dass sie im abgesenkten Zustand über die Durchführungsöffnung (21) ragt, wobei die Lasche (40`) an ihrem freien Ende (43) ein Teil eines Rastverschlusses (44) zum Zusammenwirken mit einem entsprechenden Gegenstück, welches auf der gegenüberliegenden Seite der Durchführungsöffnung (21) vorgesehen ist, aufweist.

2. Vorrichtung nach einem der vorhergehenden Ansprüche,
**dadurch gekennzeichnet, dass**
der Befestigungsbereich (20) hutförmig und zum Stülpen über die Isolatorkappe (5) ausgebildet ist.

3. Vorrichtung nach einem der vorhergehenden Ansprüche,
**dadurch gekennzeichnet, dass**
die Verschmutzungsschutzvorrichtung (10) einen von der Durchführungsöffnung (21) bis zur Außenkante des Schutzschirmes (30) verlaufenden radiale Montageöffnung (32) zur seitlichen Durchführung des Anschlusselementes (7) der Isolatorkappe (5) aufweist, die vorzugsweise abschnittsweise verbreitet ist.

4. Vorrichtung nach einem der vorhergehenden Ansprüche,
**dadurch gekennzeichnet, dass**
wenigstens eine sich wahlweise über die Montageöffnung (32) erstreckende Lasche (40", 40‴) vorgesehen ist, die entweder auf der einen Seite der Montageöffnung (32) schwenkbar befestigt ist und an dem anderen Ende vorzugsweise einen Teil eines Rastverschlusses zum Zusammenwirken mit einem auf der anderen Seite der Montageöffnung (32) vorgesehenen Gegenstück aufweist, oder die als gesondertes Laschenelement ausgeführt ist, welches an seinen beiden Enden jeweils einen Teil eines Rastverschlusses aufweist und wobei die dazu geeigneten Gegenstücke zu beiden Seiten der Montageöffnung (32) vorgesehen sind.

5. Vorrichtung nach einem der vorhergehenden Ansprüche,
**dadurch gekennzeichnet, dass**
der Schutzschirm (30) derart nach außen geneigt ist, dass im montierten Zustand Regenwasser nach außen abfließt, wobei die Neigung (α) vorzugsweise 10° bis 30°, weiter vorzugsweise 20° beträgt.

6. Vorrichtung nach einem der vorhergehenden Ansprüche,
**dadurch gekennzeichnet, dass**
an der Außenkante des Schutzschirmes (30) eine Tropfkante (31) vorgesehen ist, wobei die Tropfkante (31) als Randelement (31`) umfassend eine sich über die Montageöffnung (32) erstreckende Lasche (40‴) ausgebildet sein kann.

7. Vorrichtung nach einem der vorhergehenden Ansprüche,
**dadurch gekennzeichnet, dass**
Befestigungsbereich (20), Schutzschirm (30) und/oder Lasche (40) einstückig und/oder aus Kunststoff, vorzugsweise aus spritzgussfähigem Kunststoff sind.

8. Anordnung umfassend einen Hochspannungsisolator (3) mit Isolatorkappe (5) und eine an der Isolatorkappe (5) angeordnete Verschmutzungsschutzvorrichtung (10), wobei die Verschmutzungsschutzvorrichtung (10) nach einem der vorhergehenden Ansprüche ausgebildet ist und durch Formschluss mit der Isolatorkappe (5) verbunden ist, wobei die Isolatorkappe (5) vorzugsweise eine Gabelkappe oder eine Pfannenkappe ist und/oder der Hochspannungsisolator (3) einen Lichtbogen-Schutzring (6) im Bereich der Isolatorkappe (5) aufweist.

9. Anordnung nach Anspruch 8,
**dadurch gekennzeichnet, dass**
der Schutzschirm (30) im Wesentlichen kreisförmig ausgestaltet ist, wobei der Radius des Schutzschirmes (30) vorzugsweise im Wesentlichen dem Außenradius des Lichtbogen-Schutzrings (6) des Hochspannungsisolators (3) entspricht.

## Claims

1. Contamination-protection device (10) for high-voltage insulators (3) for attachment to the insulator cap (5) of the high-voltage insulator (3), comprising an attachment region (20), which has been designed for a positive connection to the insulator cap (5) and exhibits a feed-through aperture (21) for the connector element (7) of the insulator cap (5), and a protective screen (30) which extends radially around the attachment region (20) in order to cover the high-voltage insulator (3), at least one tab (40", 40", 40‴) having been attached in the attachment region (20) or on the protective screen (30), **characterized in that** at least one tab (40') has been attached in the attachment region (20) or on the protective screen (30) so as to be capable of swivelling in such a manner that in the lowered state it protrudes across the feed-through aperture (21), said tab (40') exhibiting at its free end (43) a part of a detent closure (44) for interacting with a corresponding counterpart on the opposite side of the feed-through aperture (21).

2. Device according to the preceding claim, **characterized in that** the attachment region (20) is hat-shaped and designed to be slipped over the insulator cap (5).

3. Device according to either of the preceding claims, **characterized in that** the contamination-protection device (10) exhibits a radial mounting aperture (32), extending from the feed-through aperture (21) as far as the outer edge of the protective screen (30), for lateral feed-through of the connector element (7) of the insulator cap (5), which has preferentially been widened in some sections.

4. Device according to one of the preceding claims, **characterized in that** at least one tab (40", 40‴) optionally extending across the mounting aperture (32) has been provided which either has been attached on one side of the mounting aperture (32) so as to be capable of swivelling and at the other end preferentially exhibits a part of a detent closure for interacting with a counterpart provided on the other side of the mounting aperture (32), or which has been realized as a separate tab element which at each of its two ends exhibits a part of a detent closure and wherein the counterparts suitable for this have been provided on both sides of the mounting aperture (32) .

5. Device according to one of the preceding claims, **characterized in that** the protective screen (30) has been inclined toward the outside in such a manner that in the mounted state rainwater flows off outward, the inclination (α) preferentially amounting to 10° to 30°, more preferentially 20°.

6. Device according to one of the preceding claims, **characterized in that** a drip edge (31) has been provided on the outer edge of the protective screen (30), and said drip edge (31) may take the form of a marginal element (31') including a tab (40‴) extending across the mounting aperture (32).

7. Device according to one of the preceding claims, **characterized in that** the attachment region (20), the protective screen (30) and/or the tab (40) are in one piece and/or made of synthetic material, preferentially of injection-mouldable synthetic material.

8. Arrangement comprising a high-voltage insulator (3) with insulator cap (5) and a contamination-protection device (10) arranged on the insulator cap (5), wherein the contamination-protection device (10) has been designed according to one of the preceding claims and has been connected to the insulator cap (5) by positive closure, wherein the insulator cap (5) is preferentially a clevis cap or a socket cap, and/or the high-voltage insulator (3) exhibits an arcing ring (6) in the region of the insulator cap (5).

9. Arrangement according to Claim 8, **characterized in that** the protective screen (30) has been configured to be substantially circular, the radius of the protective screen (30) preferentially corresponding substantially to the outer radius of an arcing ring (6) of the high-voltage insulator (3).

## Revendications

1. Dispositif antipollution (10) pour isolateurs haute tension (3), destiné à être fixé à une coiffe d'isolateur (5) de l'isolateur haute tension (3), comprenant une zone de fixation (20) qui est réalisée pour un assemblage par complémentarité de forme avec la coiffe d'isolateur (5) et présente une ouverture de passage (21) pour l'élément de branchement (7) de la coiffe d'isolateur (5), et un écran de protection (30) qui s'étend radialement autour de la zone de fixation (20) pour recouvrir l'isolateur haute tension (3),
dans lequel au moins une languette (40', 40", 40‴) est fixée dans la zone de fixation (20) ou à l'écran de protection (30),
**caractérisé en ce qu'**au moins une languette (40') est fixée dans la zone de fixation (20) ou à l'écran de protection (30) de manière à pouvoir pivoter de telle sorte qu'elle dépasse de l'ouverture de passage (21) à l'état abaissé, dans lequel la languette (40') présente à son extrémité libre (43) une partie d'une fermeture encliquetable (44) destinée à coopérer avec une pièce complémentaire correspondante qui est prévue du côté opposé de l'ouverture de passage (21).

2. Dispositif selon l'une quelconque des revendications précédentes, **caractérisé en ce que** la zone de fixation (20) est réalisée en forme de chapeau et pour être enfilée sur la coiffe d'isolateur (5).

3. Dispositif selon l'une quelconque des revendications précédentes, **caractérisé en ce que** le dispositif antipollution (10) présente une ouverture de montage (32) s'étendant radialement de l'ouverture de passage (21) jusqu'au bord extérieur de l'écran de protection (30) pour le passage latéral de l'élément de branchement (7) de la coiffe d'isolateur (5) et qui est de préférence élargie par endroits.

4. Dispositif selon l'une quelconque des revendications précédentes, **caractérisé en ce qu'**au moins une languette (40", 40‴) s'étendant en option par-dessus l'ouverture de montage (32) est prévue qui est fixée de manière à pouvoir pivoter d'un côté de l'ouverture de montage (32) et présente à l'autre extrémité de préférence une partie d'une fermeture encliquetable destinée à coopérer avec une pièce complémentaire prévue de l'autre côté de l'ouverture de montage (32), ou bien qui est réalisée comme un élément de languette séparé qui présente à ses deux extrémités respectivement une partie d'une fermeture encliquetable, et dans lequel les pièces complémentaires adéquates à cet effet sont prévues des deux côtés de l'ouverture de montage (32).

5. Dispositif selon l'une quelconque des revendications précédentes, **caractérisé en ce que** l'écran de protection (30) est incliné vers l'extérieur de telle sorte qu'à l'état monté, l'eau de pluie s'écoule vers l'extérieur, dans lequel l'inclinaison (α) est de préférence égale à 10° à 30°, de plus grande préférence à 20°.

6. Dispositif selon l'une quelconque des revendications précédentes, **caractérisé en ce que** sur le bord extérieur de l'écran de protection (30) un larmier (31) est prévu, dans lequel le larmier (31) peut être réalisé sous la forme d'un élément marginal (31') comprenant une languette (40‴) s'étendant par-dessus l'ouverture de montage (32).

7. Dispositif selon l'une quelconque des revendications précédentes, **caractérisé en ce que** la zone de fixation (20), l'écran de protection (30) et/ou la languette (40) sont réalisés d'un seul tenant et/ou en matière plastique, de préférence en matière plastique moulable par injection.

8. Agencement, comprenant un isolateur haute tension (3) pourvu d'une coiffe d'isolateur (5) et d'un dispositif antipollution (10) disposé sur la coiffe d'isolateur (5), dans lequel le dispositif antipollution (10) est réalisé selon l'une quelconque des revendications précédentes et est relié par complémentarité de forme à la coiffe d'isolateur (5), dans lequel la coiffe d'isolateur (5) est de préférence une coiffe fourchue ou une coiffe creuse et/ou l'isolateur haute tension (3) présente un anneau de garde (6) dans la zone de la coiffe d'isolateur (5).

9. Agencement selon la revendication 8, **caractérisé en ce que** l'écran de protection (30) est configuré de manière substantiellement circulaire, dans lequel le rayon de l'écran de protection (30) correspond de préférence substantiellement au rayon extérieur de l'anneau de garde (6) de l'isolateur haute tension (3).
